# EUROPEAN PATENT APPLICATION

(11) **EP 4 712 248 A2**
(43) Date of publication of application: **18.03.2026**
(21) Application number: 26154444.9
(22) Date of filing: 02.08.2023
(51) Int. Cl.: H01M 50/502

(54) **BATTERY PACK**

(30) Priority: 05.08.2022 KR 20220098083
(62) Divisional of application: 23850433.6
(71) Applicant: LG ENERGY SOLUTION, LTD., Seoul 07335 (KR)
(72) Inventor: SHIN, Ju Hwan, 34122 Daejeon (KR); LEE, Jae Hyun, 34122 Daejeon (KR); LEE, Hyoung Suk, 34122 Daejeon (KR); CHOI, Jong Hwa, 34122 Daejeon (KR); HUR, Nam Hoon, 34122 Daejeon (KR)
(74) Representative: Plasseraud IP

(57) **Abstract**

Disclosed herein relates to a battery pack for accommodating a battery module, including: a pack case in which a battery module settles; wherein the pack case includes: a main separation wall; a base plate coupled to the main separation wall and including a module area wherein the battery module is settled; and a side wall coupled along a perimeter of a base plate coupled to the main separation wall; wherein the main separation wall includes an insulating material with low thermal conductivity.

## Description

### [Technical Field]

The present invention relates to a relates to a battery pack, and more particularly, the present invention provides a battery pack having an insulating material capable of blocking the propagation of heat to other battery modules in the event of thermal runaway from a battery module accommodated therein.

This application claims the benefit of priority to Korean Patent Applications No. 10-2022-0098083, filed on August 5, 2022, the disclosure of which is incorporated herein by reference in its entirety.

### [Background Technology of the Invention]

Types of secondary batteries include lithium-ion batteries, lithium polymer batteries, nickel-cadmium batteries, nickel-hydrogen batteries, nickel-zinc batteries, and the like. The operating voltage of these unit secondary batteries, or unit battery cells, is approximately 2.5V to 4.5 V. Therefore, if a higher output voltage is required, a plurality of battery cells may be connected in series to form a battery pack. In addition, depending on the charge/discharge capacity required for the battery pack, a plurality of battery cells may be connected in parallel to form a battery pack. Thus, the number of battery cells included in the battery pack may be varied depending on the required output voltage or charge/discharge capacity.

Meanwhile, when configuring a battery pack by connecting a plurality of battery cells in series/parallel, it is common to first configure a battery module including at least one battery cell, and then add other components using the at least one battery module to configure the battery pack.

Conventional battery packs include battery modules including a plurality of battery cells, and if an abnormal situation occurs in one of the battery modules, such as the expansion of the battery cells, it can lead to a thermal runaway to the neighboring battery modules and eventually cause the battery pack to explode.

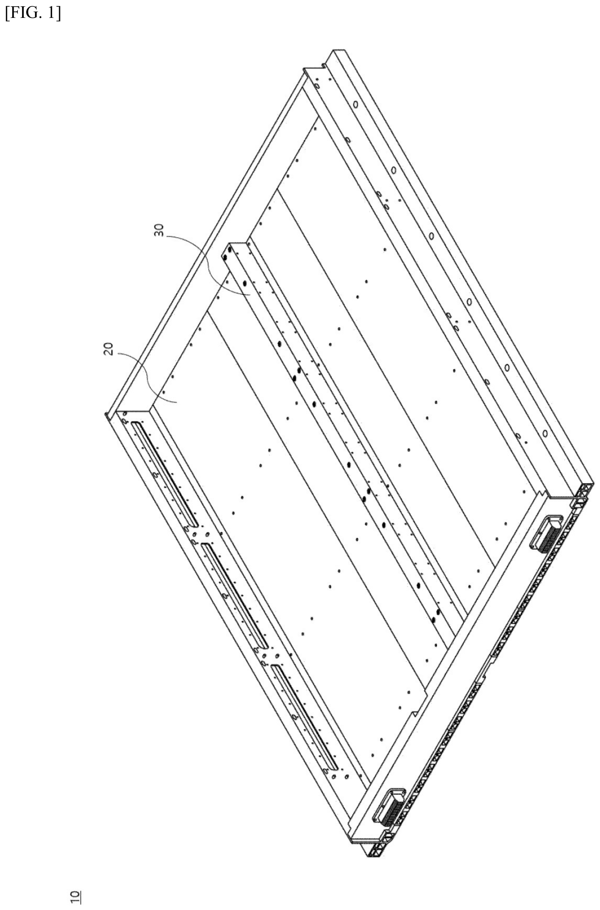

FIG. 1 illustrates a pack case 10 in which a battery module B is settled in a conventionally used battery pack, wherein a plurality of battery modules B is settled on both sides of a main separation wall 30 extending along the center part. In this case, the commonly used main separation wall 30 is made of a metal material and is coupled by welding or the like with a metal base plate 20 that supports the lower part of the battery modules B. However, since the main separation wall 30 has a high thermal conductivity due to the material characteristics, there may be a problem that heat H is easily propagated through the main separation wall 30 when thermal runaway T occurs in the battery module B.

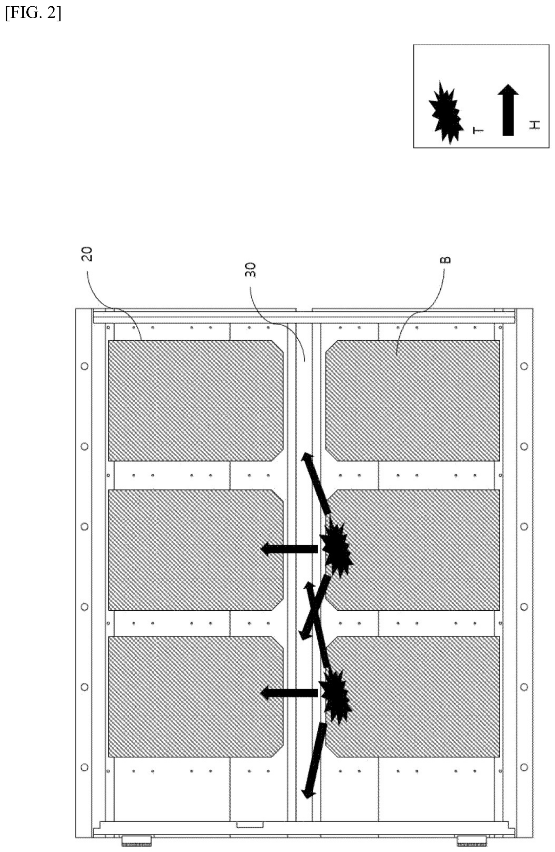

FIG. 2 is a plan view of a battery module B settled in the pack case 10 of FIG. 1.

When thermal runaway T occurs in a pair of battery modules B housed in the pack case 10 of FIG. 2, the high temperature heat H propagates through the main separation wall 30 facing that battery module B to the opposite battery module B.

Therefore, it is necessary to develop a battery pack with a structure that can effectively block the transfer of heat to other battery modules in the vicinity when an abnormal situation occurs in a battery module and thermal runaway occurs.

### [Prior Art Document]

Korean Patent Publication No. 10-2258827

### [Description of the Invention]

### [Technical Problem]

Accordingly, the present invention was conceived to solve the above problems, and aims to provide a battery pack having a structure capable of preventing the propagation of the generated high temperature heat to other battery modules in the vicinity when a thermal runaway occurs in an accommodated battery module.

Other objects and advantages of the present invention will be understood from the following description, and will become apparent from the embodiments of the present invention. It will also be readily apparent that the objects and advantages of the present invention may be implemented by the means and combinations thereof disclosed in the claims of the patent.

### [Technical Solution]

According to the present invention, the present invention provides a battery pack accommodating a battery module, including: a pack case in which a battery module settles; wherein the pack case includes: a main separation wall; a base plate coupled to the main separation wall and including a module area wherein the battery module is settled; and a side wall coupled along a perimeter of a base plate coupled to the main separation wall; wherein the main separation wall includes: an insulating material with low thermal conductivity.

The main separation wall includes: a cover member having a hollow shape with a hollow interior; and an insulation member inserted into the interior of the cover member; wherein, the insulation member may include an insulating material.

A lower part of the cover member is open, and the insulation member may be inserted through the lower part of the cover member.

The cover member includes: a coupling part coupled to the base plate; and a protrusion part coupled to the coupling part and protruding toward the upper part, and may form an insertion groove in the lower part.

The insulation member may include: a base part that coupled to the coupling part; and an insertion part protruding toward the upper part on the base part to be inserted into the insertion groove.

The cover member may include an open hole opened to expose an insulation member inserted therein to the outside.

The open hole may be formed in the side part of the cover member at predetermined spacings.

The open hole may be formed extending a predetermined length along the longitudinal direction of the main separation wall.

The cover member may include an auxiliary open hole, which is opened to expose an insulation member inserted therein to the outside, in the upper part.

The insulation member may include a wire groove formed at its lower part for insertion of a wire or busbar installed across the center part of the base plate.

The insulating material may include at least one of heat-resistant plastic and heat-resistant silicone.

The insulation member may include a plurality of compartment pins that compartmentalize the space inside the cover member.

One end of the main separation wall is coupled to the side wall, the cover member includes an open hole through which an insulation member inserted therein is exposed to the outside, a side wall coupled to the main separation wall is connected to the open hole, and may include a discharge hole opened to expose the hollow interior of the main separation wall.

### [Advantageous Effects]

According to the present invention, even if at least one of the battery modules of the plurality of battery modules accommodated generates high temperature heat due to thermal runaway, the transfer of the heat to other battery modules can be delayed or prevented.

### [Brief Description of the Drawings]

FIG. 1 is a perspective view of a pack case included in a conventional battery pack.
FIG. 2 is a plan view of the battery module settled in the pack case of FIG. 1.
FIG. 3 is a perspective view of a battery pack according to a first embodiment of the present invention.
FIG. 4 illustrates a cover member and an insulation member of a main separation wall included in a battery pack according to a first embodiment of the present invention.
FIG. 5 is a perspective and partial cross-sectional view of the main separation wall coupled with the cover member and insulation member of FIG. 4.
FIG. 6 illustrates a modified example of an insulation member included in the main separation wall.
FIG. 7 is a plan view of the battery module settled in the pack case of FIG. 3.
FIG. 8 illustrates a pack case included in a battery pack according to a second embodiment of the present invention.
FIG. 9 is a plan view of the pack case of FIG. 8.
FIG. 10 illustrates a cover member and an insulation member of a main separation wall included in a battery pack according to a second embodiment of the present invention.
FIG. 11 is a perspective view of a main separation wall coupled with the cover member and insulation member of FIG. 10.
FIG. 12 is a perspective view of a pack case included in a battery pack according to a third embodiment of the present invention.
FIG. 13 is a perspective view of a main separation wall included in the pack case of FIG. 12.
FIG. 14 illustrates a portion of the exterior surface of a side wall coupled to a main separation wall.

### [Best Mode for Carrying out the Invention]

Hereinafter, preferred embodiments of the present invention will be described in detail with reference to the accompanying drawings. Before doing so, it should be noted that the terms and words used in this specification and claims are not to be construed in their ordinary or dictionary sense, but rather in a sense and concept consistent with the technical idea of the present invention, based on the principle that the inventor may properly define the concept of a term to best describe his invention.

Accordingly, it is to be understood that the embodiments described herein and the configurations illustrated in the drawings are only the most preferred embodiments of the present invention and do not represent all of the technical ideas of the present invention, and that there may be various equivalents and variations that may be substituted for them at the time of filing the present disclosure.

In addition, in describing the present invention, detailed descriptions of related known configurations or features are omitted where it is determined that such detailed descriptions would obscure the essence of the present invention.

Since the embodiments of the present invention are provided to more fully illustrate the present invention to those of ordinary skill in the art, the shapes and sizes of the components in the drawings may be exaggerated, omitted, or shown schematically for clarity. Accordingly, the size or proportions of each component are not necessarily indicative of its actual size or proportions.

The present invention relates to a battery pack having an insulating material capable of blocking heat propagation to other battery modules B even when thermal runaway T occurs in a battery module B accommodated therein.

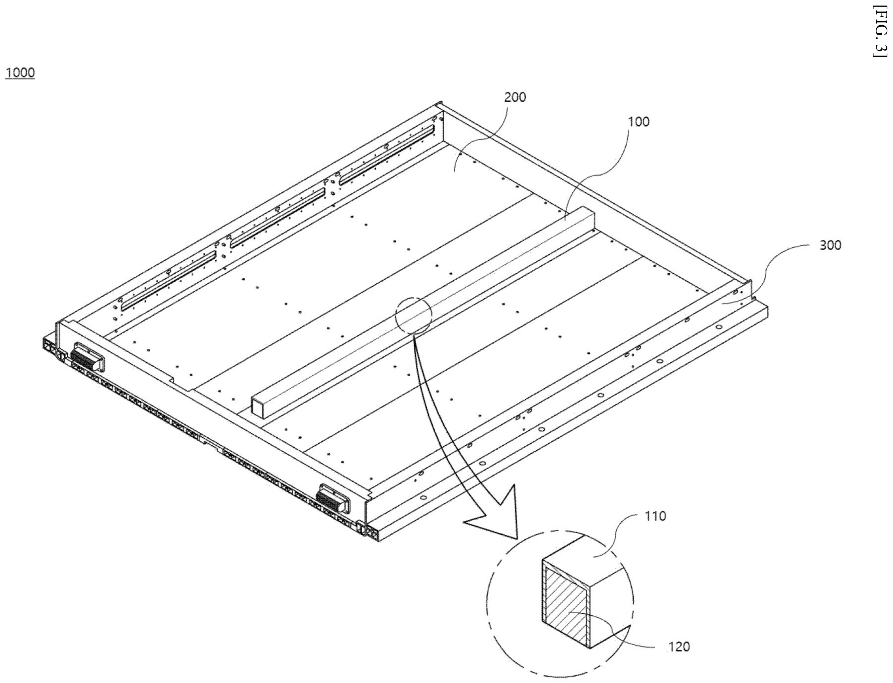

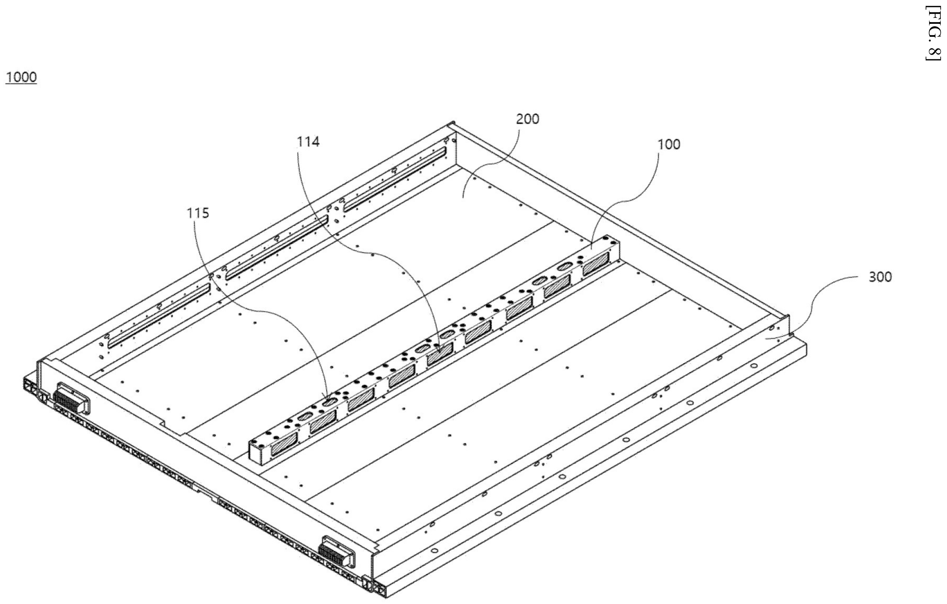

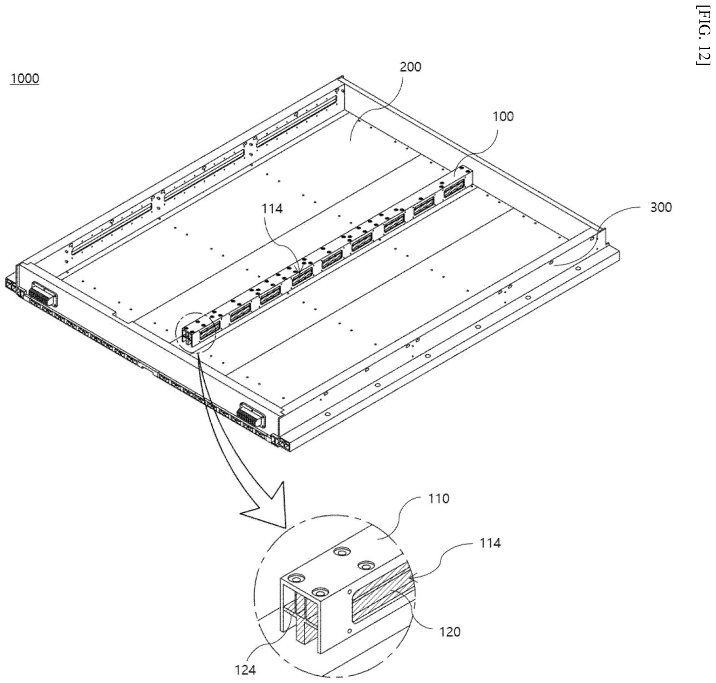

FIGS. 3 through 7 illustrate a battery pack according to a first embodiment of the present invention, FIGS. 8 through 11 illustrate a battery pack according to a second embodiment of the present invention, and FIGS. 12 through 13 illustrate a battery pack according to a third embodiment of the present invention.

Hereinafter, the battery pack of the present invention will be described in each embodiment with reference to the accompanying drawings.

### (First embodiment)

The battery pack of the present invention includes a pack case 1000 in which battery modules B are settled, and an upper cover coupled to the pack case 1000 to cover the upper part of each battery module B accommodated in the pack case 1000.

The pack case 1000 provides a module area, which is a space in which a plurality of battery modules B is settled, and serves to protect the battery modules B settled in the module area from the outside.

Since the upper cover falls within the known art, a detailed description thereof is omitted herein.

FIG. 3 is a perspective view of a battery pack according to a first embodiment of the present invention.

The pack case 1000 of the present invention includes a main separation wall 100, a base plate 200, and a side wall 300, as shown in FIG. 3.

The main separation wall 100 serves to compartmentalize the internal space of the pack case 1000, and also serves to protect the battery module B settled inside the pack case 1000. Optionally, the main separation wall 100 may have wires, busbars, and the like that are inserted and installed to internally cross the pack case 1000 and may be protected by them.

The main separation wall 100 is formed to traverse the center part of the pack case 1000 so as to roughly divide the module area into two spaces.

The plurality of battery modules B that are settled in the pack case 1000 may be positioned on both sides with the main separation wall 100 in between.

The base plate 200 corresponds to the bottom of the pack case 1000 and serves to support the lower part of the battery module B.

More specifically, the base plate 200 includes a module area in which the battery module B is settled.

The base plate 200 exist in pairs and are respectively coupled to both sides of the main separation wall 100.

The side wall 300 serves to support and protect the sides of the battery module B accommodated in the pack case 1000, and are coupled along the perimeter of the base plate 200 coupled to the main separation wall 100.

The main separation wall 100 of the present invention is characterized in that it includes an insulating material with low thermal conductivity.

More specifically, the main separation wall 100 of the present invention comprises an insulating material and is located in the center part of the pack case 1000 and serves to block heat exchange between the module areas on one side and the module areas on the other side.

The insulating material has properties that allow it to block heat or delay heat transfer. For example, the insulating material may include any one of a heat-resistant plastic and a heat-resistant silicone.

Referring to FIG. 3, the main separation wall 100 includes a cover member 110 having a hollow form with a hollow interior, and an insulation member 120 inserted into the interior of the cover member 110 and including an insulating material.

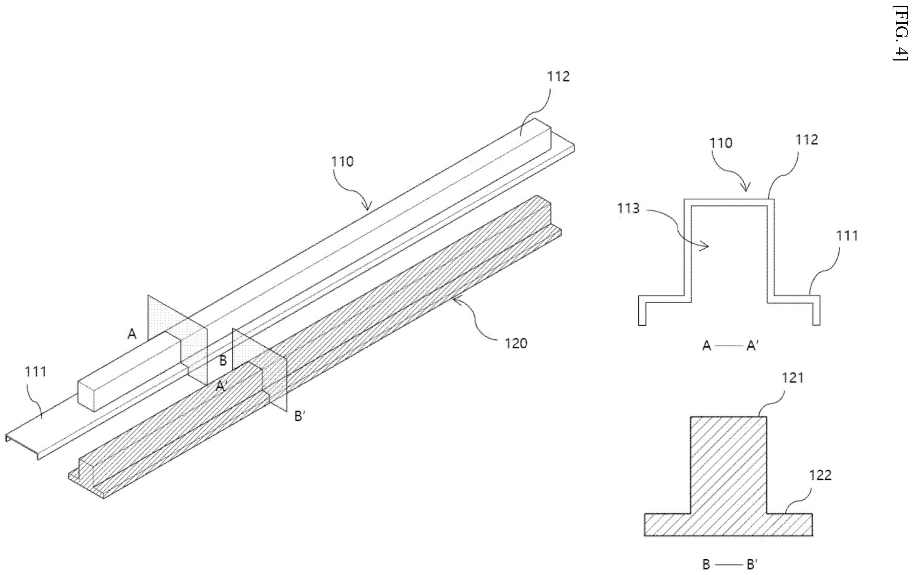

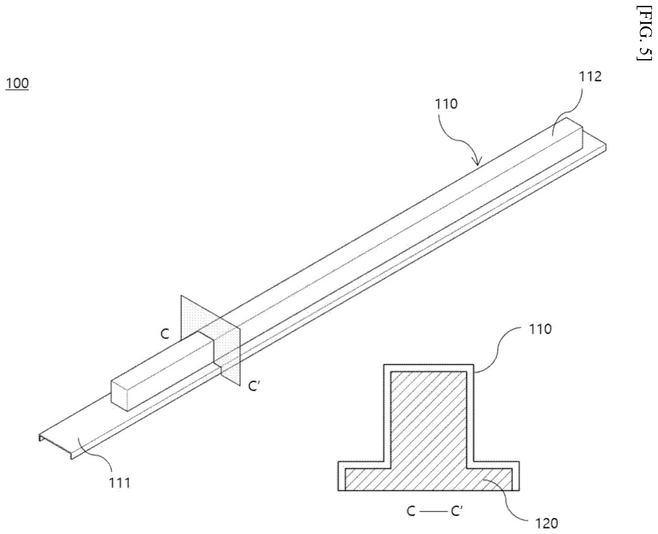

FIG. 4 illustrates a cover member 110 and an insulation member 120 of a main separation wall 100 included in a battery pack according to a first embodiment of the present invention, and FIG. 5 is a perspective view and partial cross-sectional view of the main separation wall 100 coupled with the cover member 110 and insulation member 120 of FIG. 4.

Referring to FIGS. 4 and 5, a lower part of the cover member 110 included in the main separation wall 100 is open, and the insulation member 120 is formed to be insertable through the lower part of the cover member 110.

The cover member 110 includes a coupling part 111 that is coupled to the base plate 200 and a protrusion part 112 that is coupled to the coupling part 111 and is protruded toward the upper part.

The cover member 110 includes at its lower part an insertion groove 113 formed corresponding to the position of the protrusion part 112 as shown in FIG. 4.

As shown in FIGS. 4 and 5, the insulation member 120 includes a base part 122 that is coupled to the coupling part 111 of the cover member 110, and an insertion part 121 protruded toward the upper part from the base part 122 to be inserted into the insertion groove 113.

Thus, the main separation wall 100 is formed by inserting and coupling the insertion part 121 of the insulation member 120 into the insertion groove 113 of the cover member 110. At this time, the insulation member 120, by being coupled to the cover member 110, can not only improve the insulation of the main separation wall 100, but also play a role in reinforcing the strength of the main separation wall 100 by supporting the hollow cover member 110.

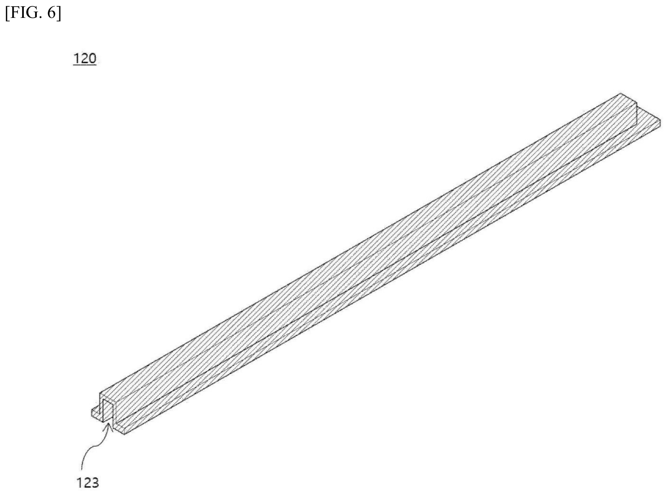

FIG. 6 illustrates a modified example of the insulation member 120 included in the main separation wall 100, wherein within the pack case 1000 of the present invention, wires or busbars or the like may be located across the center. Thus, the main separation wall 100 may be protected from the outside by inserting the wires and busbars or the like into a wire groove 123 formed in its lower part, as shown in FIG. 6.

When thermal runaway T occurs in at least one of the plurality of battery modules B settled on any one side relative to the main separation wall 100, the battery pack of the present invention can effectively prevent heat of the module area where the thermal runaway T occurs from being conducted and propagated to the other side of the main separation wall 100.

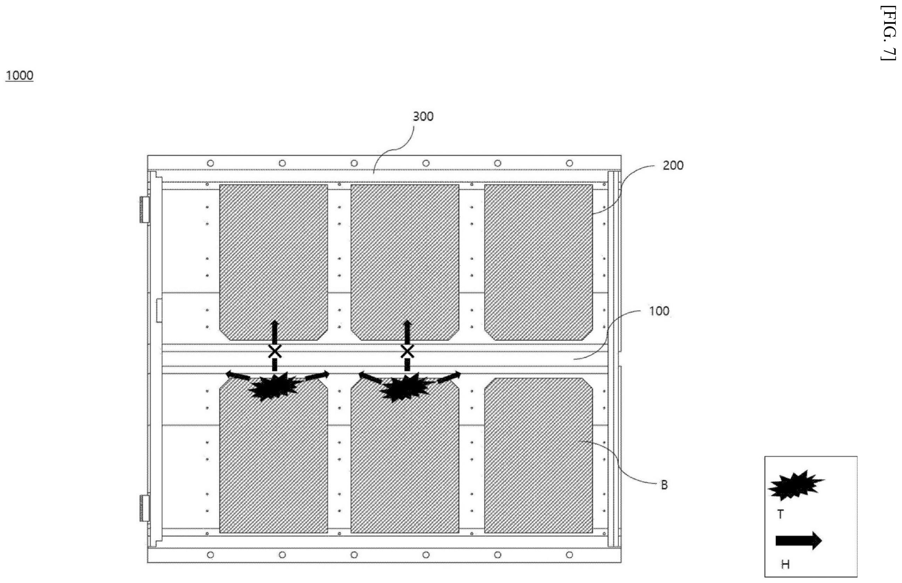

FIG. 7 is a plan view of the battery module B settled in the pack case 1000 of FIG. 3.

Referring to FIG. 7, even if a thermal runaway T occurs in an adjacent pair of battery modules B on one side of the main separation wall 100, there is no heat H propagation to the other side of the main separation wall 100 by the main separation wall 100 including the insulating material.

As described above, the battery pack 1000 of the present invention can delay or prevent the propagation of heat H relative to the main separation wall 100, since the main separation wall 100 installed in the center part includes an insulation member 120 including an insulating material.

### (Second embodiment)

The main separation wall 100 of the present invention can be manufactured in a variety of forms.

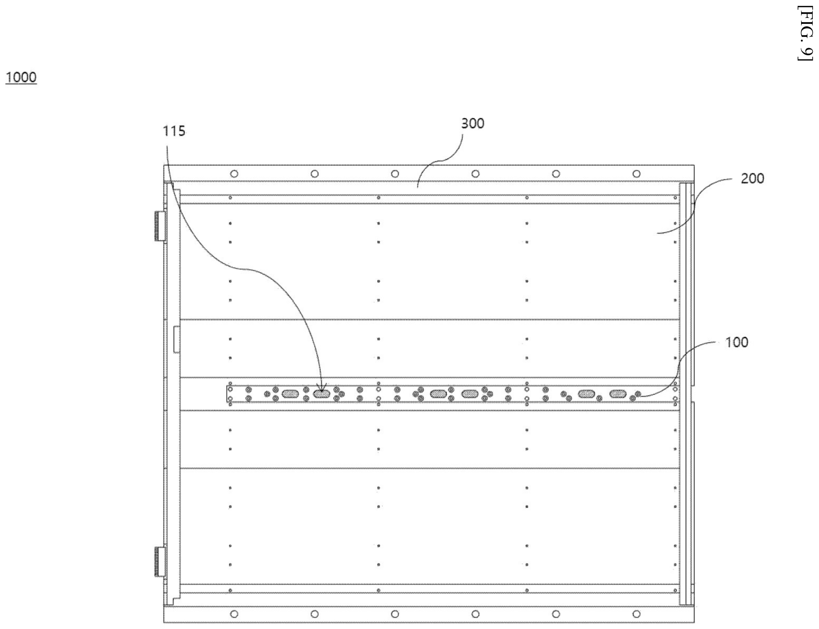

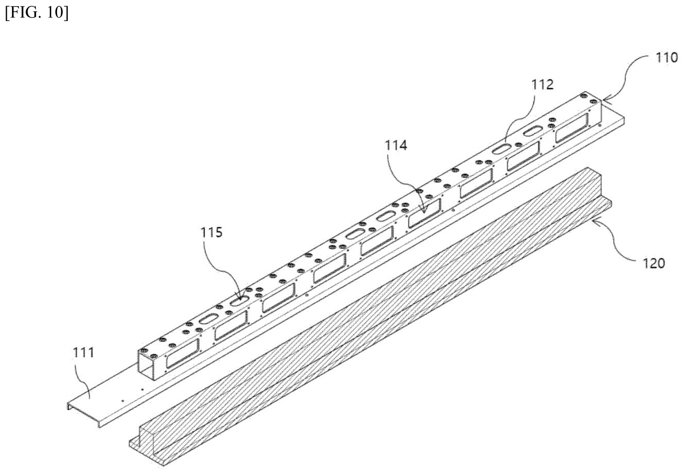

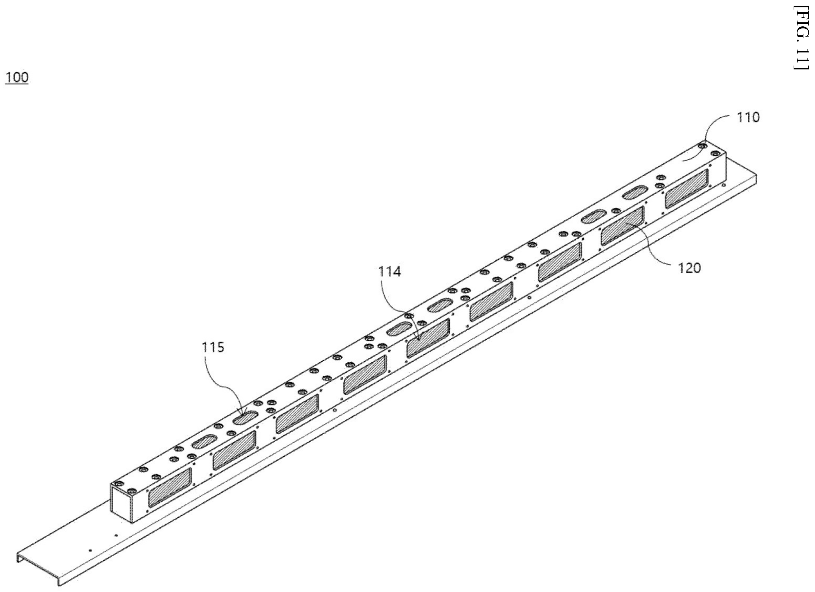

FIG. 8 shows a pack case 1000 included in a battery pack according to a second embodiment of the present invention, FIG. 9 is a plan view of the pack case 1000 of FIG. 8, FIG. 10 shows a cover member 110 and an insulation member 120 of a main separation wall 100 included in a battery pack according to a second embodiment of the present invention, and FIG. 11 is a perspective view of the main separation wall 100 coupled with the cover member 110 and the insulation member 120 of FIG. 10.

The main separation wall 100 includes a cover member 110 and an insulation member 120 coupled to the cover member 110, as shown in FIGS. 8 through 11.

The cover member 110 included in the battery pack according to the second embodiment includes an open hole 114 through which an insulation member 120 inserted therein is exposed to the outside. More specifically, the open hole 114 is formed extending for a predetermined length along the longitudinal direction of the main separation wall 100.

The open hole 114 may be formed at predetermined spacings on the sides of the protrusion part 112 of the cover member 110, as shown in FIGS. 10 and 11.
The cover member 110 may further include an auxiliary open hole 115, which is open to expose an insulation member 120 inserted therein to the outside, at the upper part.

Same as the open hole 114, the auxiliary open hole 115 may be formed extending a predetermined length along the longitudinal direction of the main separation wall 100, and may be formed at predetermined spacings by being spaced apart at the upper part of the protrusion part 112 of the cover member 110, as shown in FIGS. 10 and 11.

The battery pack according to the second embodiment has a relatively smaller surface area of the thermally conductive cover member 110 than in the first embodiment, and the insulation member 120 is open to the outside through the open hole 114 or the auxiliary open hole 115, so that the heat propagation caused by the thermal runaway T of the battery module B can be more effectively delayed or blocked.

### (Third embodiment)

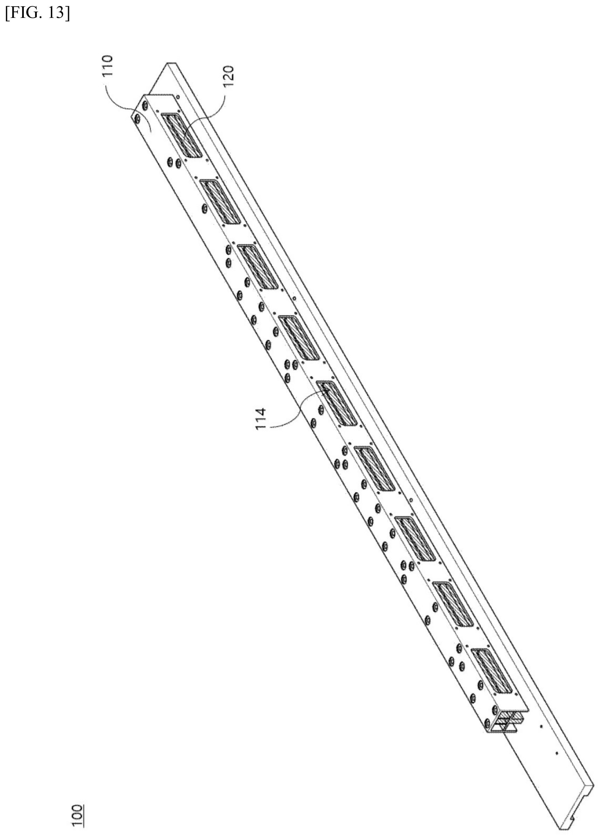

FIG. 12 is a perspective view of a pack case 1000 included in a battery pack according to a third embodiment of the present invention, and FIG. 13 is a perspective view of a main separation wall 100 included in the pack case 1000 of FIG. 12.

The insulation member 120 included in the main separation wall 100 is characterized in that it includes a plurality of compartment pins 124 that compartmentalize the internal space of the cover member 110.

More specifically, the compartment pins 124 are formed to transversely and longitudinally compartmentalize the internal space of the cover member 110, and extend along the longitudinal direction of the main separation wall 100, as shown in FIGS. 12 and 13.

The pack case 1000 may include a plurality of wires and busbars or the like connected while crossing through its center, wherein the wires and busbars may be installed in spaces compartmentalized by compartment pins 124 of the cover member 110 and insulation member 120.

Alternatively, the space compartmentalized by the compartment pins 124 within the main separation wall 100 may serve as a gas moving pathway through which gases generated by the battery module B may travel.

One end of the main separation wall 100 is coupled with a side wall 300, and the sidewall 300 coupled with the main separation wall 100 includes a discharge hole 310 connected to a hollow of the main separation wall 100.

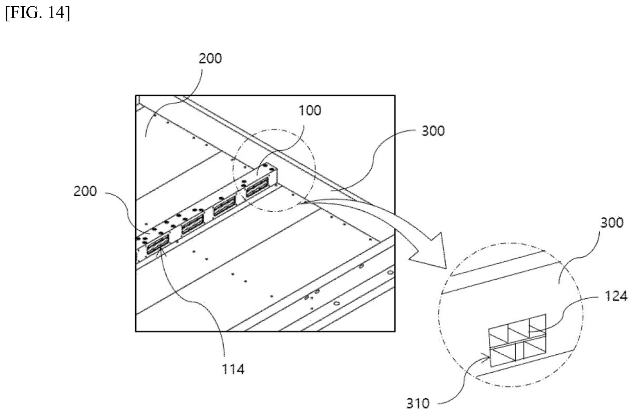

FIG. 14 illustrates a portion of an exterior surface of the side wall 300 coupled to the main separation wall 100, wherein according to FIG. 14, through the discharge hole 310, the compartment pin 124 inside the main separation wall 100 and the space compartmentalized by the compartment pin 124 are exposed.

Therefore, the pack case 1000 of the present invention is capable of blocking the transfer of the heat to the other side of the main separation wall 100 even if a thermal runaway phenomenon T occurs in any one of the plurality of battery modules B accommodated therein, and furthermore, even if high temperature gases are released from the battery module B in which the thermal runaway T occurs, it is possible to quickly discharge the gases to the outside through the open hole 114 of the main separation wall 100 and the discharge holes 310 associated therewith.

The present invention has been described in more detail above with reference to the drawings and embodiments. However, it is to be understood that the configurations shown in the drawings or embodiments described herein are only one embodiment of the invention and do not represent all of the technical ideas of the present invention, and that there may be various equivalents and modifications that may replace them at the time of filing the present disclosure.

### [Reference numerals]

10: (CONVENTIONAL ART) PACK CASE
20: (CONVENTIONAL ART) BASE PLATE
30: (CONVENTIONAL ART) MAIN SEPARATION WALL
1000: PACK CASE
100: MAIN SEPARATION WALL
110: COVER MEMBER
111: COUPLING PART
112: PROTRUSION PART
113: INSERTION GROOVE
114: OPEN HOLE
115: AUXILIARY OPEN HOLE
120: INSULATION MEMBER
121: INSERTION PART
122: BASE PART
123: WIRE GROOVE
124: COMPARTMENT PIN
200: BASE PLATE
300: SIDE WALL
310: DISCHARGE HOLE
B: BATTERY MODULE
T: THERMAL RUNAWAY
H: HEAT(MOVE)

Preferred embodiments of the Invention are specified in the following items:

### [Item 1]

A battery pack accommodating a battery module, comprising:
a pack case in which a battery module settles; wherein
the pack case comprises:
   a main separation wall;
   a base plate coupled to the main separation wall and including a module area wherein the battery module is settled; and
   a side wall coupled along a perimeter of a base plate coupled to the main separation wall; wherein
   the main separation wall comprises:
      an insulating material with low thermal conductivity.

### [Item 2]

The battery pack of Item 1, wherein
the main separation wall comprises:
a cover member having a hollow shape with a hollow interior; and
an insulation member inserted into the interior of the cover member; wherein, the insulation member comprises an insulating material.

### [Item 3]

The battery pack of Item 2, wherein
a lower part of the cover member is open, and
the insulation member is inserted through the lower part of the cover member.

### [Item 4]

The battery pack of Item 2, wherein
the cover member comprises:
a coupling part coupled to the base plate; and
a protrusion part coupled to the coupling part and protruding toward the upper part, and
forms an insertion groove in the lower part.

### [Item 5]

The battery pack of Item 4, wherein
the insulation member comprises:
a base part that coupled to the coupling part; and
an insertion part protruding toward the upper part on the base part to be inserted into the insertion groove.

### [Item 6]

The battery pack of Item 2, wherein
the cover member comprises an open hole opened to expose an insulation member inserted therein to the outside.

### [Item 7]

The battery pack of Item 6, wherein
the open hole is formed in the side part of the cover member at predetermined spacings.

### [Item 8]

The battery pack of Item 6, wherein
the open hole is formed extending a predetermined length along the longitudinal direction of the main separation wall.

### [Item 9]

The battery pack of Item 6, wherein
the cover member includes an auxiliary open hole, which is opened to expose an insulation member inserted therein to the outside, in the upper part.

### [Item 10]

The battery pack of Item 2, wherein
the insulation member includes a wire groove formed at its lower part for insertion of a wire or busbar installed across the center part of the base plate.

### [Item 11]

The battery pack of Item 1, wherein
the insulating material comprises at least one of heat-resistant plastic and heat-resistant silicone.

### [Item 12]

The battery pack of Item 2, wherein
the insulation member comprises a plurality of compartment pins that compartmentalize the space inside the cover member.

### [Item 13]

The battery pack of Item 12, wherein
one end of the main separation wall is coupled to the side wall,
the cover member includes an open hole through which an insulation member inserted therein is exposed to the outside,
a side wall coupled to the main separation wall is connected to the open hole, and comprises a discharge hole opened to expose the hollow interior of the main separation wall.

## Claims

1. A battery pack accommodating a battery module, comprising:
a pack case in which a battery module settles; wherein
the pack case comprises:
a main separation wall;
a base plate coupled to the main separation wall and including a module area wherein the battery module is settled; and
a side wall coupled along a perimeter of a base plate coupled to the main separation wall; wherein
the main separation wall comprises:
a cover member having a hollow shape with a hollow interior; and
an insulation member inserted into the interior of the cover member; wherein,
the insulation member comprises an insulating material with low thermal conductivity,
wherein the cover member comprises an open hole opened to expose the insulation member inserted therein to the outside.

2. The battery pack of claim 1, wherein
a lower part of the cover member is open, and
the insulation member is inserted through the lower part of the cover member.

3. The battery pack of any of the above claims, wherein
the cover member comprises:
a coupling part coupled to the base plate; and
a protrusion part coupled to the coupling part and protruding toward an upper part, and
forms an insertion groove in a lower part.

4. The battery pack of claim 3, wherein
the insulation member comprises:
a base part that coupled to the coupling part; and
an insertion part protruding toward the upper part on the base part to be inserted into the insertion groove.

5. The battery pack of any of the above claims, wherein
the open hole is formed in the side part of the cover member at predetermined spacings.

6. The battery pack of any of the above claims, wherein
the open hole is formed extending a predetermined length along the longitudinal direction of the main separation wall.

7. The battery pack of any of the above claims, wherein
the cover member includes an auxiliary open hole, which is opened to expose an insulation member inserted therein to the outside, in an upper part.

8. The battery pack of any of the above claims, wherein
the insulation member includes a wire groove formed at a lower part for insertion of a wire or busbar installed across the center part of the base plate.

9. The battery pack of any of the above claims, wherein
the insulating material comprises at least one of heat-resistant plastic and heat-resistant silicone.

10. The battery pack of any of the above claims, wherein
the insulation member comprises a plurality of compartment pins that compartmentalize the space inside the cover member.

11. The battery pack of claim 10, wherein
one end of the main separation wall is coupled to the side wall,
the cover member includes an open hole through which an insulation member inserted therein is exposed to the outside,
a side wall coupled to the main separation wall is connected to the open hole, and comprises a discharge hole opened to expose the hollow interior of the main separation wall.
